# EUROPÄISCHE PATENTANMELDUNG

(11) **EP 3 934 067 A1**
(43) Veröffentlichungstag der Anmeldung: **05.01.2022**
(21) Anmeldenummer: 21181954.5
(22) Anmeldetag: 28.06.2021
(51) Int. Cl.: H02K 3/14, H02K 3/24, H02K 3/34, H02K 3/487, H02K 15/04, H02K 3/50

(54) **WICKLUNGSSYSTEM FÜR EINE ELEKTRISCHE MASCHINE**

(30) Priorität: 30.06.2020 DE 102020208130
(71) Anmelder: Siemens Mobility GmbH, 81739 München (DE)
(72) Erfinder: Bachmann, Svenja, 80335 München (DE); Lutz, Willi, 91639 Wolframs-Eschenbach (DE); Mayr, Andreas, 84478 Waldkraiburg (DE); Waffler, Harald, 90537 Feucht (DE)

(57) **Zusammenfassung**

Die vorliegende Erfindung betrifft ein Wicklungssystem für eine elektrische Maschine, welches aus zu Litzenstäben geformten Litzenleiter aufgebaut ist, welche zudem derart vorgeformt sind, dass eine einfache Verbindung der einzelnen Litzenstäbe miteinander möglich ist. Die Litzenstäbe können in Nuten der Maschine vergossen sein, wobei beim Vergießen zusätzlich Kühlkanäle geschaffen werden können. Letztlich erlaubt die Konstruktion das Vermeiden von Wechselstromverlusten bei gleichzeitiger effizienter Kühlung.

## Beschreibung

Die vorliegende Erfindung betrifft ein eine hochkompakte Wicklung für eine elektrische Maschine.

Bei elektrischen Maschinen mit hohen Leistungsdichten müssen Probleme einerseits aufgrund von Wechselstromverlusten und andererseits aufgrund von übermäßiger Erwärmung adressiert werden, um den hocheffizienten Betrieb der Maschine zu gewährleisten.

Derartige Maschinen werden bei vergleichsweise hohen Drehgeschwindigkeiten bzw. Grundfrequenzen betrieben, bspw. in Größenordnungen von 2,5kHz. Die dementsprechend hohen Wechselstromfrequenzen gehen bekanntermaßen mit Wechselstromverlusten aufgrund von Skin- und Proximityeffekten einher.

Um diesen Verlusten entgegen zu wirken, werden die Leiter der Wicklungen des Wicklungssystems des Stators und/oder ggf. des Rotors als Litzenleiter ausgebildet, welche jeweils aus einer Vielzahl von vergleichsweise dünnen Einzeldrähten bzw. -adern bestehen. Die Litzenleiter machen sich den Effekt zu Nutze, dass die Stromverdrängung im Leiter, der bspw. als Kupferleiter ausgebildet sein kann, unterdrückt wird und jede Einzelader den gleichen Strom führt, so dass im Idealfall keine zusätzlichen Stromwärmeverluste entstehen.

Infolge der vielen isolierten Einzeladern an Stelle eines massiven Leiters sinkt jedoch der sog. Nutfüllfaktor, welcher ein Maß für das Verhältnis von Leitermaterial, bspw. Kupfer, zu nicht leitendem Material, bspw. Luft oder Isoliermaterial, in der jeweiligen Nut darstellt, bspw. ausgedrückt durch den Quotienten aus Leiterquerschnittsfläche und Nutquerschnittsfläche, und die regulären Stromwärmeverluste steigen an.

Eine Verbesserung des Nutfüllfaktors kann durch eine vorhergehende Profilierung des Leiters erreicht werden, welcher in diesem Fall geordnet in die Nut eingebracht ist, so dass sich eine verbesserte Ausnutzung der Nutquerschnittsfläche ergibt. Im Wickelkopfbereich, in dem der Leiter von einer Nut in die entsprechend nächste Nut überführt wird und dabei seine Erstreckungsrichtung um 180° ändern muss, ergibt sich bei Verwendung eines Litzenleiters jedoch das Problem eines Auffächerns der Litze in der entsprechenden 180°-Biegung. Dies führt dazu, dass ein regelmäßiger Wickelkopfaufbau erschwert und der Bauraumbedarf für den Wickelkopf erheblich vergrößert wird.

Diese bei der Verwendung von Litzenleitern auftretenden Probleme können durch Verwendung von Formstabwicklungen vermieden werden. Formstabwicklungen herkömmlicher Art, bspw. vom "Hair-Pin"- oder "I-Pin"-Typ, können aus profilierten Kupferleitern bzw. Kupferstäben hergestellt sein und ermöglichen einen hohen Nutfüllfaktor, einen regelmäßigen Aufbau und definierte Abstände. Ein weiterer Vorteil von Formstabwicklungen ist deren regelmäßiger Aufbau sowie die dadurch ermöglichten kurzen Wickelköpfe. Formstabwicklungen weisen jedoch aufgrund der Verwendung massiver Leiter den wesentlichen Nachteil auf, dass bei höheren Frequenzen die Wechselstromverluste infolge der Stromverdrängung stark zunehmen, wobei zudem die Leiter in Luftspaltnähe stärker erhitzt werden als diejenigen am Nutgrund.

Diese inhomogene Verlustverteilung stellt ein zusätzliches Problem dar welches durch entsprechende Kühlung adressiert werden muss. Wie einleitend erwähnt stellt die Kühlung der hochleistungsdichten elektrischen Maschinen bzw. die Entwärmung des Leiters ohnehin eine eigene Problematik dar, da Kühlmittel ggf. nicht ideal mit dem Leiter wechselwirken kann, so dass mit erheblichen Verlusten zu rechnen und/oder ein eingeschränkter Betrieb bei entsprechend reduzierter Leistung notwendig wird.

Es ist daher eine Aufgabe der vorliegenden Erfindung, eine Möglichkeit anzugeben, eine elektrische Maschine mit hoher Leistungsdichte mit geringen Verlusten zu betreiben.

Diese Aufgabe wird mit Hilfe des in Anspruch 1 beschriebenen Litzenstabes, mit Hilfe des in Anspruch 8 eingeführten Wicklungssystems bestehend aus derartigen Litzenstäben und durch das in Anspruch 10 beschriebene Herstellverfahren gelöst. Die Unteransprüche beschreiben vorteilhafte Ausgestaltungen.

Ein aus einem Litzenleiter mit einer Vielzahl von Einzelleitern gebildeter Litzenstab weist einen ersten, einen zweiten und einen dritten Abschnitt auf, wobei der zweite Abschnitt in der axialen Erstreckungsrichtung des Litzenstabs zwischen dem ersten und dem dritten Abschnitt angeordnet ist. An den beiden Enden des Litzenstabes, d.h. im ersten und dritten Abschnitt des Litzenstabes, d.h. am jeweiligen vom zweiten Abschnitt abgewandten Ende des ersten und dritten Abschnitts, befinden sich Endbereiche des Litzenstabes. Der Litzenstab ist nun derart vorgeformt, dass er über seine gesamte Länge inklusive der Endbereiche einen in Erstreckungsrichtung bzw. axialer Richtung gesehen rechteckigen Querschnitt aufweist. Dabei ist der zweite Abschnitt gerade und erstreckt sich in axialer Richtung. Dagegen sind die im ersten und dritten Abschnitt angeordneten Endbereiche gegenüber dem zweiten Abschnitt in tangentialer Richtung und in axialer Richtung versetzt. Dieser Aufbau des Litzenstabes bewirkt zum Einen die Reduzierung von Wechselstromverlusten. Der rechteckige Querschnitt ermöglicht zum Einen eine ideale Nutausfüllung. Zum Anderen bieten die damit geschaffenen planen Oberflächen des Litzenstabes eine maximale Fläche zur Wechselwirkung mit einem Kühlmittel.

Um die Versetzungen der Endbereiche gegenüber dem zweiten Abschnitt zu realisieren sind der erste sowie der dritte Abschnitt in radialer Draufsicht auf den jeweiligen Litzenstab S-förmig, also doppelt, aber in unterschiedliche Richtungen gebogen. Alternativ zur S-förmigen Ausgestaltung können der erste sowie der dritte Abschnitt jeweils gerade verlaufen und gegenüber dem zweiten Abschnitt jeweils um einen Winkel a mit 90°<a<180° abgewinkelt sein. Beide Alternativen erreichen in vergleichsweise einfacher Umsetzung die Versetzungen der Endbereiche, ohne dass bspw. eine Auffächerung der Litzen zu befürchten ist.

Vorteilhafterweise ist ein jeweiliger Litzenstab derart geformt, dass der erste, der zweite und der dritte Abschnitt und damit auch die Endbereiche im Wesentlichen in einer Ebene liegen, welche sich in tangentialer Richtung und in axialer Richtung erstreckt. Die Lage der Ebene orientiert sich derart an den vier Oberflächen des mit rechteckigem Querschnitt versehenen Litzenstabes, dass zwei dieser Oberflächen, welche selbst parallel zueinander sind, parallel zur Ebene sind. Diese Geometrie erlaubt in der Folge einen einfachen Aufbau eines Wicklungssystems.

In den Endbereichen der Litzenstäbe können elektrisch leitfähige Hülsen vorgesehen sein, welche die in den Endbereichen des Litzenstabes endenden Einzelleiter des jeweiligen Litzenstabes umfassen, wobei ein elektrischer Kontakt zwischen Einzelleitern und jeweiliger Hülse bewirkt ist. Das Vorsehen der Hülsen in den Endbereichen ermöglicht eine einfache Kontaktierung verschiedener Litzenstäbe miteinander und bewirkt desweiteren eine Fixierung der Einzelleiter, so dass die kompaktierte Form des Litzenstabes beibehalten wird.

Die Versetzungen dA, dT sind derart dimensioniert, dass die Endbereiche eines Litzenstabes bzgl. des geometrischen Mittelpunktes des zweiten Abschnitts punktsymmetrisch zueinander angeordnet sind. Diese regelmäßige und symmetrische Dimensionierung der Litzenstäbe erlaubt einen einfachen Aufbau des Wicklungssystems.

Ein entsprechendes Wicklungssystem für ein Aktivteil, bspw. für einen Stator oder für einen Rotor, einer elektrischen Maschine ist aus einer Vielzahl derartiger Litzenstäbe aufgebaut. Dabei sind zumindest die Litzenstäbe einer Teilmenge der Litzenstäbe eine Reihenschaltung bildend hintereinander geschaltet. Die Litzenstäbe einer oder mehrerer weiterer Teilmengen der Vielzahl von Litzenstäben können dementsprechend eine oder mehrere weitere Reihenschaltungen bildend hintereinander geschaltet sein. Im Folgenden wird lediglich auf eine dieser Teilmengen eingegangen, wobei die hierfür ausgeführten Erläuterungen in analoger Weise auch für eventuelle andere Teilmengen gelten.

Zur Erzeugung einer Reihenschaltung werden insbesondere die Endbereiche der Litzenstäbe bzw. die dort ggf. angeordneten Hülsen elektrisch miteinander verbunden, wobei einer der Endbereiche eines ersten Litzenstabes der Reihenschaltung mit einem der Endbereiche des in der Reihenschaltung hinter den ersten Litzenstab zu schaltenden weiteren Litzenstabes elektrisch verbunden wird.

Für einen jeweiligen Litzenstab ist zumindest ein Kühlkanal zum Leiten eines Kühlmittels zur Kühlung dieses Litzenstabes vorgesehen. Der Kühlkanal verläuft idealerweise an einer der vier radialen bzw. tangentialen Oberflächen des jeweiligen Litzenstabes insbesondere in axialer Richtung. Wie bereits erwähnt stehen aufgrund des rechteckigen Querschnitts vergleichsweise große Oberflächen zur Wechselwirkung mit dem Kühlmittel zur Verfügung, so dass eine effiziente Kühlung ermöglicht ist.

Die zweiten Abschnitte der Litzenstäbe können ausgebildet sein, um in Nuten des Aktivteils positioniert zu werden, während die ersten und dritten Abschnitte konsequenterweise in axialer Richtung aus der jeweiligen Nut heraus ragen. Das Wicklungssystem umfasst für jede der Nuten eine Nutauskleidung, in die die Litzenstäbe bzw. deren zweite Abschnitte eingelegt sind, wobei die Nutauskleidung eine oder mehrere Aussparungen zur Bildung eines jeweiligen Kühlkanals aufweist. Es sind somit keine separat anzufertigenden Kühlkanäle notwendig, sondern die Kühlkanäle werden durch die entsprechende Ausgestaltung der Nutverkleidung selbst realisiert. Zur Herstellung eines solchen Wicklungssystems an einem Aktivteil einer elektrischen Maschine wird in einem ersten Verfahrensschritt S1 eine Vielzahl von Litzenstäben bereit gestellt und wie bereits beschrieben derart vorgeformt, dass der jeweilige Litzenstab über seine gesamte Länge inklusive der Endbereiche einen in Erstreckungsrichtung bzw. axialer Richtung gesehen rechteckigen Querschnitt aufweist, dass der zweite Abschnitt gerade ist und sich in axialer Richtung erstreckt und dass die im ersten und im dritten Abschnitt angeordneten Endbereiche gegenüber dem zweiten Abschnitt in tangentialer Richtung und in axialer Richtung versetzt sind. In einem zweiten Verfahrensschritt S2 wird dann das Wicklungssystem aus den vorgeformten Litzenstäben in einfacher Art und Weise aufgebaut.

Im ersten Verfahrensschritt zum Vorformen eines jeweiligen Litzenstabes wird in einem ersten Teilschritt S1-1 des ersten Verfahrensschrittes S1 ein eine Vielzahl von isolierten Einzelleitern umfassender Litzenleiter einer bestimmten Länge bereitgestellt und zur Bildung des Litzenstabes zunächst über seine gesamte Länge mit einem rechteckigen Querschnitt versehen. In einem zweiten Teilschritt S1-2 des ersten Verfahrensschrittes S1 wird der so im ersten Teilschritt S1-1 gebildete Litzenstab unter Beibehaltung des rechteckigem Querschnitts dahin gehend gebogen, dass seine Endbereiche gegenüber seinem jeweiligen zweiten Abschnitt in tangentialer und in axialer Richtung versetzt sind. Insbesondere die hierbei gewählten tangentialen Versetzungen dT werden bspw. mit dT=dTN/2 in Abhängigkeit von den tangentialen Abständen dTN derjenigen Nuten vorgegeben, in denen in der Reihenschaltung des Wicklungssystems hintereinander zu schaltende Litzenstäbe positioniert werden sollen.

In einem dritten Teilschritt S1-3 des ersten Verfahrensschrittes S1 werden nach dessen zweiten Teilschritt S1-2 in jedem der Endbereiche eines jeweiligen Litzenstabes die dortigen Einzelleiter elektrisch miteinander verbunden, bspw. durch Heißcrimpen. Die so gebildeten Gesamtkontakte werden jeweils mit einer elektrisch leitfähigen Hülse versehen und elektrisch kontaktiert. Diese Vorbereitung erlaubt letztlich eine vergleichsweise wenig aufwändige Erstellung der Reihenschaltung durch elektrische Kontaktierung entsprechender Litzenstäbe.

Die vorgeformten Litzenstäbe werden in einem ersten Teilschritt S2-1 des zweiten Verfahrensschrittes S2 derart in Nuten des Aktivteils eingelegt, dass jeweils einer der Endbereiche derjenigen Litzenstäbe, die in der Reihenschaltung des Wicklungssystems hintereinander geschaltet sein sollen, mit ihren Hülsen beieinander liegen, bspw. übereinander, so dass sie direkt, d.h. insbesondere ohne nennenswerte mechanische Beanspruchung wie bspw. Verbiegungen oder Verformungen, elektrisch miteinander verbunden werden können, um schließlich die angestrebte Reihenschaltung zu realisieren.

In einem nach dem ersten Teilschritt S2-1 folgenden zweiten Teilschritt S2-2 des zweiten Verfahrensschrittes S2 werden diejenigen Litzenstäbe, welche in der Reihenschaltung des Wicklungssystems hintereinander liegen, an den beieinander liegenden Endbereichen bzw. Hülsen elektrisch miteinander verbunden.

In einem optionalen, vor dem ersten Teilschritt S2-1 des zweiten Verfahrensschrittes S2 auszuführenden Zwischenschritt S2-0 können jeweils zwei Litzenstäbe, bevor sie in die für sie vorgesehenen Nuten eingelegt werden, an denjenigen ihrer Endbereiche bzw. Hülsen bereits vorab elektrisch miteinander verbunden werden, welche im in das Aktivteil bzw. in dessen Nuten eingebauten Zustand beieinander liegen sollen, um die Reichenschaltung zu realisieren. Dies bewirkt eine weitere Erleichterung der Montage des Wicklungssystems, da die zur Verbindung nötigen Löt- oder Schweißarbeiten bereits vorab und ohne die am Aktivteil naturgemäß einschränkten Platzverhältnisse ausgeführt werden können. Für den Fall, dass dieser optionale Schritt S2-0 stattgefunden hat und dementsprechend schon eine Vielzahl von elektrischen Verbindungen hergestellt wurde, entfallen im zweiten Teilschritt S2-2 des zweiten Verfahrensschrittes S2 diese Schritte zum elektrischen Verbinden natürlich für die bereits bestehenden elektrischen Verbindungen.

Die Litzenstäbe können in Nutauskleidungen der Nuten des Aktivteils eingelegt werden, wobei eine jeweilige Nutauskleidung mit Hilfe eines Vergussverfahrens hergestellt wird, bei dem jeweils ein oder mehrere Litzenstäbe in die Nut eingelegt und dort zur Bildung der jeweiligen Nutauskleidung mit einem Vergussmaterial vergossen werden. Die jeweilige Nutauskleidung weist für zumindest einen dort vergossenen Litzenstab einen Kühlkanal in Form einer Aussparung zum Leiten eines Kühlmittels zum Kühlen des Litzenstabes auf. Die jeweilige Aussparung wird geschaffen, indem beim Vergießen im Bereich des zu kühlenden Litzenstabs an dem Ort, an dem das Kühlmittel mit dem zu kühlenden Litzenstab wechselwirken soll, also bspw. entlang einer radialen oder tangentialen Oberfläche des Litzenstabes, ein Platzhalter positioniert wird, welcher nach dem Vergießen und insbesondere nach Aushärtung des Vergussmaterials entfernt wird, so dass der jeweilige Kühlkanal als Aussparung bzw. Hohlraum zurück bleibt. Dementsprechend lässt sich in einfacher Art und Weise ein Kühlsystem für das Wicklungssystem aufbauen.

Im Folgenden werden die Erfindung und beispielhafte Ausführungsformen anhand von Zeichnungen näher erläutert. Dort werden gleiche Komponenten in verschiedenen Figuren durch gleiche Bezugszeichen gekennzeichnet. Es ist daher möglich, dass sich bei der Beschreibung einer zweiten Figur zu einem bestimmten Bezugszeichen, welches bereits im Zusammenhang mit einer anderen, ersten Figur erläutert wurde, keine näheren Erläuterungen finden. In einem solchen Fall kann bei der Ausführungsform der zweiten Figur davon ausgegangen werden, dass die dort mit diesem Bezugszeichen gekennzeichnete Komponente auch ohne nähere Erläuterung im Zusammenhang mit der zweiten Figur die gleichen Eigenschaften und Funktionalitäten aufweist, wie im Zusammenhang mit der ersten Figur erläutert. Desweiteren werden der Übersichtlichkeit wegen teilweise nicht sämtliche Bezugszeichen in sämtlichen Figuren dargestellt, sondern nur diejenigen, auf die in der Beschreibung der jeweiligen Figur Bezug genommen wird.

Es zeigen:
- FIG 1: einen einen Rotor und einen Stator darstellenden Ausschnitt einer aus dem Stand der Technik bekannten elektrischen Maschine,
- FIG 2: eine Nut mit dort befindlichem Leiter des Statorwicklungssystems der Maschine,
- FIG 3: einen Litzenstab in einer ersten Ausführung,
- FIG 4: eine Litzenstab in einer zweiten Ausführung,
- FIG 5: eine radiale Draufsicht auf einen Ausschnitt eines Statorwicklungssystems bestehend aus den Litzenstäben,
- FIG 6: ein Verfahren zur Herstellung eines Statorwicklungssystems.

Es sei angemerkt, dass sich Begriffe wie "axial", "radial", "tangential" etc. auf die in der jeweiligen Figur bzw. im jeweils beschriebenen Beispiel zum Einsatz kommende Drehachse des Rotors beziehen. Mit anderen Worten beziehen sich die Richtungen axial, radial, tangential stets auf eine Drehachse des Rotors und damit auf die entsprechende Symmetrieachse des Stators. Dabei beschreibt "axial" eine Richtung parallel zur Achse, "radial" beschreibt eine Richtung orthogonal zur Achse, auf diese zu oder auch von ihr weg, und "tangential" ist eine Richtung, die in konstantem radialen Abstand zur Achse und bei konstanter Axialposition kreisförmig um die Achse herum gerichtet ist. Der Ausdruck "in Umfangsrichtung" ist mit "tangential" gleichzusetzen. Insbesondere sollen sich Begriffe wie "oben", "unten", "über", "unter", "auf" etc. auf die radiale Richtung beziehen und unabhängig von der Richtung der Gravitationswirkung sein.

Im Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Der Begriff "benachbart" soll im Zusammenhang mit Bauteilen, bspw. mit Spulen oder Statorzähnen, ausdrücken, dass sich im Falle von "benachbarten Bauteilen" zwischen diesen beiden Bauteilen insbesondere kein weiteres derartiges Bauteil befindet, sondern höchstens ein leerer Zwischenraum oder ggf. ein andersartiges Bauteil.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Schließlich verweisen an entsprechenden Pfeilen und gestrichelten Linien vorgesehenen römischen Zahlen auf die den römischen Zahlen entsprechenden Figuren, wobei diese entsprechenden Figuren den Blick auf die durch die gestrichelte Linie markierte Ebene bzw. den korrespondierenden Querschnitt in der durch den Pfeil vorgegebenen Blickrichtung zeigen.

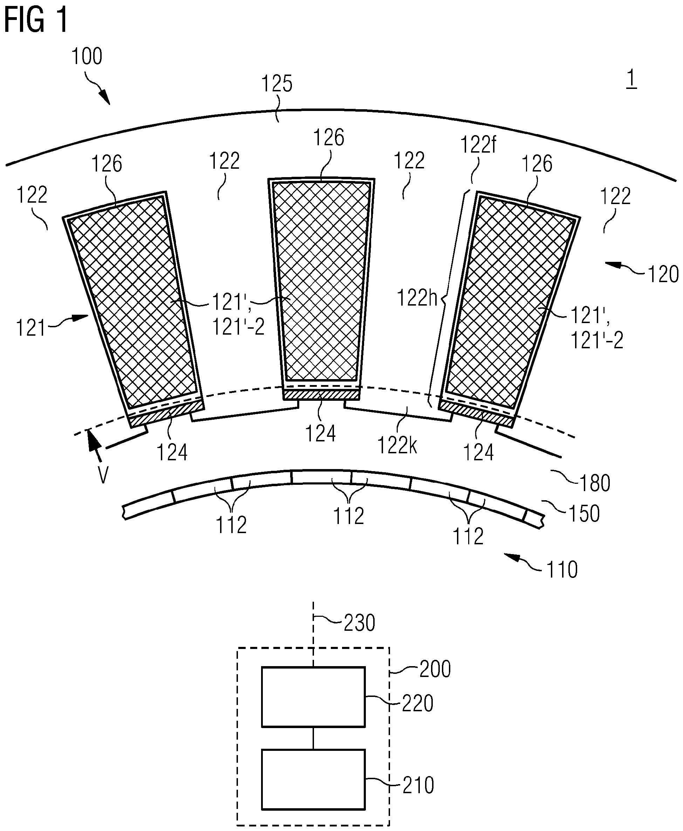

Die FIG 1 zeigt stark vereinfacht eine axiale Sicht auf einen Ausschnitt einer elektrischen Maschine 100 eines Systems 1, welche bspw. als Elektromotor ausgebildet sein kann. wie sie im Stand der Technik bekannt ist. Es sei erwähnt, dass die elektrische Maschine 100 in ähnlichem Aufbau grundsätzlich auch als Generator betrieben werden kann. Weiterhin sei betont, dass der Aufbau der im Folgenden beschriebenen Maschine 100 stark vereinfacht ist und lediglich zur Veranschaulichung der grundsätzlichen Funktionsweise der elektrischen Maschine dient. Es kann als bekannt vorausgesetzt werden, dass je nach konkreter gewünschter Ausbildung der elektrischen Maschine 100 als Generator oder als Elektromotor und/oder als bspw. Radial- oder Axialflussmaschine mit einem als Innen- oder auch als Außenläufer ausgebildeten Rotor etc. die verschiedenen Komponenten der Maschine 100 unterschiedlich angeordnet sein können.

Der Elektromotor 100 weist einen im Wesentlichen ringförmigen bzw. hohlzylindrischen Stator 120 sowie einen hier exemplarisch als Innenläufer ausgebildeten, im Wesentlichen zylindrischen Rotor 110 auf, wobei der Rotor 110 innerhalb des Stators 120 und konzentrisch zu dieser angeordnet ist und im Betriebszustand des Elektromotors 100 um eine Rotationsachse rotiert. Dabei bilden Rotor 110 und Stator 120 einen zwischen ihnen liegenden Luftspalt 150 aus. Der Rotor 110 weist erste magnetische Mittel 112 auf, die bspw. als Permanentmagnete 112 ausgebildet und an einer dem Stator 120 zugewandten Oberfläche des Rotors 110 angeordnet sein können. Dies ist in FIG 1 nur schematisch angedeutet, ohne bspw. auf Mittel einzugehen, die die Magnete 112 auch bei schnell drehendem Rotor 110 an diesem fixieren. Abweichend von der exemplarischen Darstellung könnte der Rotor 110 auch mit "vergrabenen" Magneten, als Kurzschlussläufer oder mit gewickelten Polen ausgeführt sein. Der Rotor 110 ist drehfest mit einer hier nicht dargestellten Welle verbunden, so dass eine Rotation des Rotors 110 über die Welle auf eine ebenfalls nicht dargestellte anzutreibende Komponente, bspw. auf eine Komponente eines Antriebssystems übertragbar ist.

Der Stator 120 weist eine Vielzahl von einzelnen Statorzähnen 122 sowie zweite magnetische Mittel 121 auf, die bspw. als elektrische Leiter 121' eines Statorwicklungssystems 121 realisiert sein können. In FIG 1 sind die Leiter 121' lediglich durch schraffiert gekennzeichnete Bereiche angedeutet. Jeder Statorzahn 122 weist einen dem Rotor 110 der Maschine 100 zugewandten Zahnkopf 122k, einen vom Rotor 110 abgewandten Zahnfuß 122f und einen zwischen Zahnkopf 122k und Zahnfuß 122f angeordneten Zahnhals 122h auf. Dies ist der Übersichtlichkeit wegen nur für einen der Statorzähne 122 dargestellt. Die Zahnfüße 122f sind mit einem Statorjoch 125 des Stators 120 verbunden oder bilden dieses selbst.

Die Leiter 121' sind jeweils im Bereich des Zahnhalses 122h eines jeweiligen Zahnes 122 zwischen dessen Zahnfuß 122f und Zahnkopf 122k angeordnet. Demnach befinden sich in einer jeweiligen Statornut 126 zwischen zwei in tangentialer Richtung benachbarten Statorzähnen 122 Abschnitte 121'-2 der zwischen diesen beiden Statorzähnen 122 angeordneten Leiter 121', während weitere, jedoch nicht dargestellte Abschnitte der Leiter 121' die sogenannten Wickelköpfe 129 des Statorwicklungssystems bilden. Diese sind in FIG 1 jedoch nicht dargestellt. Aufbau und Anordnung der speziellen Leiter 121' werden in den folgenden Figuren erläutert.

Um die in einer jeweiligen Nut 126 befindlichen Abschnitte 121'-2 der jeweiligen Leiter 121' vor Beschädigungen zu schützen und um insbesondere sicher zu stellen, dass die Wicklungen 121 an Ort und Stelle verbleiben und in radialer Richtung nicht verrutschen, können bspw. als Nutverschlusskeile ausgebildete Nutverschlüsse 124 vorgesehen sein. Diese sind zwischen zwei benachbarten Statorzähnen 122 im Bereich der Zahnköpfe 122k dieser Zähne 122 angeordnet und verschließen die zwischen diesen Zähnen 122 gebildete Statornut 126.

Die Leiter bzw. zweiten elektrischen Mittel 121' sind im Betriebszustand des Elektromotors 100 von einem elektrischen Strom durchflossen, so dass in bekannter Weise magnetische Felder erzeugt werden. Die ersten und die zweiten magnetischen Mittel 112, 121 sind derart ausgebildet und durch den Luftspalt 150 voneinander beabstandet zueinander angeordnet, dass sie im Betriebszustand des Elektromotors 100 elektromagnetisch miteinander wechselwirken. Dieses Konzept einschließlich der Bedingungen für die Ausbildung und genaue Anordnung der magnetischen Mittel 112, 121 bzw. von Rotor 110 und Stator 120 sind an sich bekannt und werden daher im Folgenden nicht näher erläutert. Es sei lediglich erwähnt, dass zum Betreiben der elektrischen Maschine 100 als Elektromotor das Statorwicklungssystem 121 bzw. dessen Leiter 121' mit Hilfe einer lediglich schematisch angedeuteten Stromquelle 200 mit den genannten elektrischen Strömen beaufschlagt werden, die bewirken, dass die Leiter 121' dementsprechende Magnetfelder erzeugen, welche mit den Magnetfeldern der Permanentmagnete 112 des Rotors 110 in elektromagnetische Wechselwirkung treten. Dies resultiert darin, dass auf die Permanentmagnete 112 ein Drehmoment in einer tangentialen Richtung bzw. Umfangsrichtung wirkt, welches unter der Voraussetzung, dass die Permanentmagnete 112 ausreichend fest mit dem Rotorgrundkörper 111 verbunden sind, darin resultiert, dass bei geeigneter Ausbildung und Anordnung der genannten Komponenten zueinander der Rotor 110 und mit ihm die Welle in Rotation versetzt werden.

Die Stromquelle 200 umfasst eine elektrische Energiequelle 210, bspw. eine Batterie oder einen elektrischen Generator, und eine Leistungselektronik 220, die die von der Energiequelle 210 bereit gestellte elektrische Energie über die mit der gestrichelten Linie 230 angedeutete elektrische Verbindung in das momentan vom Elektromotor 100 zum Erbringen der bspw. von einem Betreiber des Systems 1 angeforderten Leistung benötigte Strom-/Spannungssignal wandelt.

Dieses auf der elektromagnetischen Wechselwirkung fußende Konzept der Ausbildung der elektrischen Maschine 100 als Elektromotor kann als bekannt vorausgesetzt werden. Auch die alternative Konfiguration und Verwendung der elektrischen Maschine 100 als Generator kann als bekannt vorausgesetzt werden. In letzterem Betriebsmodus ist in der FIG 1 insbesondere die Komponente 210 als Verbraucher zu verstehen, bspw. wiederum als aufladbare Batterie und/oder als Elektromotor. Ein vom Generator 100 geliefertes Strom-/Spannungssignal wird von der Leistungselektronik 220 in ein vom Verbraucher 210 verarbeitbares Strom-/Spannungssignal gewandelt. Beide Ausbildungen der elektrischen Maschine 100 werden aufgrund der Bekanntheit der Konzepte im Folgenden nicht weiter detailliert.

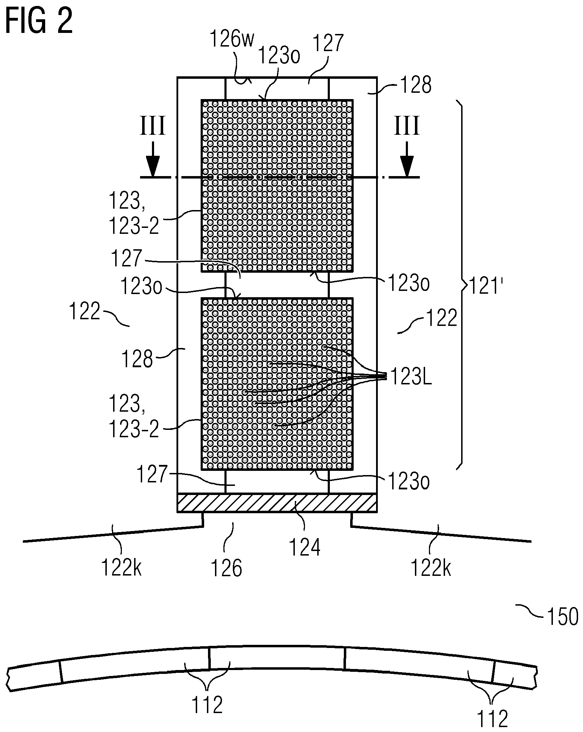

Wie einleitend erwähnt ist insbesondere bei hochleistungsdichten Maschinen 100 der Abtransport der im Betrieb am Leiter 121' entstehenden Wärme essentiell. Hierzu werden in der hier offenbarten elektrischen Maschine Kühlkanäle 127 vorgesehen, deren Ausbildung und Anordnung in FIG 2 exemplarisch dargestellt ist.

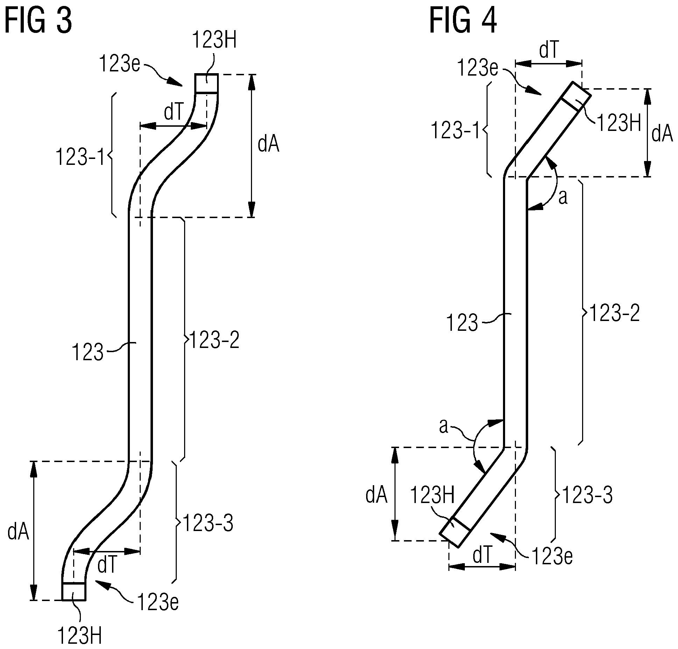

Die FIG 2 zeigt einen Querschnitt bzw. eine axiale Sicht auf eine der Statornuten 126 mit im Vergleich zur FIG 1 detailliert dargestelltem Leiter 121'. Es kann davon ausgegangen werden, dass die Anordnungen in den übrigen Statornuten 126 dementsprechend ausgebildet sind. Wie im Zusammenhang mit FIG 3 und 4 weiter ausgeführt wird, ist der Leiter 121' bzw. das Statorwicklungssystem 121 aus einer Vielzahl von Litzenstäben 123 aufgebaut, welche jeweils mehrere Abschnitte 123-i mit i=1, 2, 3 umfassen. Die Litzenstäbe 123 sind mit ihren zweiten Abschnitten 123-2 in die Nuten 126 derart eingelegt, dass diese Abschnitte 123-2 in der radialen Richtung gesehen übereinander liegen. Dabei sind die Abschnitte 123-2 in eine Nutauskleidung 128 eingelegt, welche aus einem Isoliermaterial bestehen kann, bspw. GFK.

Sowohl zwischen den Abschnitten 123-2 als auch zwischen jeweiligem Abschnitt 123-2 und Nutwand 126w bzw. Nutverschluss 124 sind Kühlkanäle 127 angeordnet, welche in axialer Richtung, also entlang und parallel zu den Abschnitten 123-2 verlaufen. Dadurch, dass die Abschnitte 123-2 einen rechteckigen, vorzugsweise quadratischen Querschnitt aufweisen, ist die Berührfläche zwischen Kühlkanal 127 und jeweiligem Leiter 121' bzw. 123-2 und damit die Kühlwirkung maximal. Insbesondere erlaubt diese Anordnung vorteilhafterweise eine direkte Kühlung des jeweiligen Leiters 121' bzw. 123-2.

Der Gesamtleiter 121' des Statorwicklungssystems 121 besteht aus einer Vielzahl von in Reihe geschalteten Litzenstäben 123, welche wie in der FIG 3 angedeutet einen ersten Abschnitt 123-1, einen zweiten Abschnitt 123-2 und einen dritten Abschnitt 123-3 aufweisen. Der zweite Abschnitt 123-2, welcher wie im Zusammenhang mit FIG 2 beschrieben in axialer Richtung in der jeweiligen Nut 126 positioniert wird, ist dementsprechend gerade ausgebildet und weist eine Länge auf, die der axialen Erstreckung der Nut entspricht. Die beiden weiteren Abschnitte 123-1 und 123-3 sind derart ansatzweise S-förmig ausgebildet, dass sie mit einem entsprechenden Abschnitt 123-1 bzw. 123-3 eines weiteren Litzenstabes 123, der in einer anderen Nut 126 positioniert ist und mit dem der erstgenannte Litzenstab 123 in Reihe zu schalten ist, kontaktiert werden können. Hierzu weisen die Litzenstäbe 123 Endbereiche 123e auf, die jeweils bspw. durch Löten oder Schweißen elektrisch miteinander verbunden werden, um die Reihenschaltung und damit das Statorwicklungssystem 121 zu erzeugen.

Durch die S-förmige Ausgestaltung der Abschnitte 123-1, 123-3 sind also die Endbereiche 123e gegenüber dem jeweiligen zweiten Abschnitt 123-2 zum Einen in axialer Richtung A und zum Anderen in tangentialer Richtung T versetzt. Die Versetzungen dA, dT sind derart dimensioniert, dass zum Einen die Endbereiche 123e eines Litzenstabes 123 bzgl. des Mittelpunktes des zweiten Abschnitts 123-2 punktsymmetrisch zueinander angeordnet sind. Zum Anderen sind insbesondere die tangentialen Versetzungen dT abhängig vom tangentialen Abstand dTN der Statornuten 126, in denen miteinander zu verbindenden Litzenstäbe angeordnet werden sollen. Vorzugsweise gilt dT=dTN/2, so dass die beiden tangentialen Versetzungen dT der beiden Litzenstäbe 123, sobald sie miteinander verbunden sind, in Summe gerade dem tangentialen Abstand der Nuten 126 entsprechen, in denen die betroffenen Litzenstäbe 123 positioniert werden sollen. Schließlich gilt, dass sich die Abschnitte 123-1, 123-2, 123-3 eines jeweiligen Litzenstabes 123 in einer Ebene erstrecken, wobei diese Ebene desweiteren parallel zu zweien der sich gegenüberliegenden Seitenflächen des Litzenstabes 123 liegt, welcher wie bereits erwähnt einen rechteckigen Querschnitt aufweist. Wenn der Litzenstab 123 in den Stator 120 eingebaut bzw. in der Nut 126 positioniert ist, erstreckt sich diese Ebene in tangentialer sowie in axialer Richtung.

Die so beschriebenen Versetzungen dA, dT der Endbereiche 123e sowie die Punktsymmetrie können auch dadurch erreicht werden, dass anstelle der S-förmigen Ausgestaltung gemäß FIG 3 der erste und der dritte Abschnitt 123-1, 123-3 wie der zweite Abschnitt 123-2 gerade, jedoch gegenüber dem zweiten Abschnitt 123-2 um einen Winkel a mit 90°<a<180° abgewinkelt angeordnet sind, bspw. a=135°. Dies ist in FIG 4 dargestellt. Die Herstellung solcher Litzenstäbe 123 inklusive des Heißcrimpens und des Versehens der Endbereiche 123e mit Hülsen 123H entspricht grundsätzlich der im Zusammenhang mit FIG 3 erläuterten Vorgehensweise. Andere Geometrien des ersten und des dritten Abschnitts 123-1, 123-3 sind ebenfalls denkbar. Letztlich sind den Litzenstäben 123 die Versetzungen dT, dA sowie die Punktsymmetrie gemein, da hierdurch eine vergleichsweise einfache Montage des Statorwicklungssystems 121 bei gleichzeitig kleineren und weniger komplexen Wicklköpfen 129 erreichbar ist.

Ein jeweiliger Litzenstab 123 ist zunächst als Litzenleiter ausgebildet, besteht also aus einer Vielzahl von jeweils insolierten Einzelleitern 123L. Dies ist in FIG 2 angedeutet, wobei dort der Übersichtlichkeit wegen nur einige wenige, willkürlich ausgewählte Einzelleiter 123L mit Bezugszeichen versehen sind. Zur Herstellung eines solchen Litzenstabes 123 mit rechteckigem Querschnitt werden diese Einzelleiter 123L zunächst verseilt und anschließend bspw. durch ein Walzverfahren rechteckig geformt bzw. vierkant-gepresst. Dabei können auch Knicke in den Einzelleitern 123L entstehen, es ist jedoch gewährleistet, dass die so hergestellten Litzenstäbe 123 ihren rechteckigen Querschnitt beibehalten.

Im Anschluss werden die Litzenstäbe 123 derart gebogen, dass die beschriebenen S-förmigen Abschnitte 123-1, 123-3 entstehen. Dabei kann es durchaus zu gegenseitigen Verschiebungen der Einzelleiter 123L des Litzenleiters bzw. -stabes 123 in deren Erstreckungsrichtung kommen. Dies ist jedoch zuzulassen, da diese Verschiebungen keinen Einfluss auf die Beibehaltung des rechteckigen Querschnitts haben. Nach Abschluss des Biegevorgangs werden die Litzenstäbe 123 in ihren Endbereichen 123e jeweils heißgecrimpt und dabei mit einer elektrisch leitfähigen Hülse 123H versehen, um zum Einen die Einzelleiterisolation an entsprechenden Stellen zu entfernen und um zum Anderen eine spätere paarweise Kontaktierung zweier Litzenstäbe 123 mit großer Berührfläche zu ermöglichen.

Bei dieser Kompaktierung und elektrischen Kontaktierung der an sich isolierten Einzeldrähte des Litzenleiters an den beiden Enden 123e des so vorgeformten Litzenstabes 123 entsteht eine rechtwinklige Kompaktierungszone mit planen Seitenflächen, welche idealerweise größer als der Litzenquerschnitt ist. Die elektrische Verbindung der Einzeladern des Litzenleiters erfolgt erst nach der geometrischen Formgebung zum Litzenstab 123, um bei der Formung wie erwähnt eine Verschiebung einzelner Einzelleiter 123L des Litzenleiters zuzulassen und ein Auffächern zu minimieren.

Die so geformten Litzenstäbe 123 erwirken zum Einen aufgrund der Ausbildung als Litzenleiter die Reduzierung der Wechselstromverluste. Die kompaktierte Form, die sich im rechteckigen Querschnitt niederschlägt, erlaubt desweiteren die maximale Wechselwirkung mit den an den somit planen Seitenflächen eines jeweiligen Litzenstabes 123 gemäß FIG 2 verlaufenden Kühlkanälen 127.

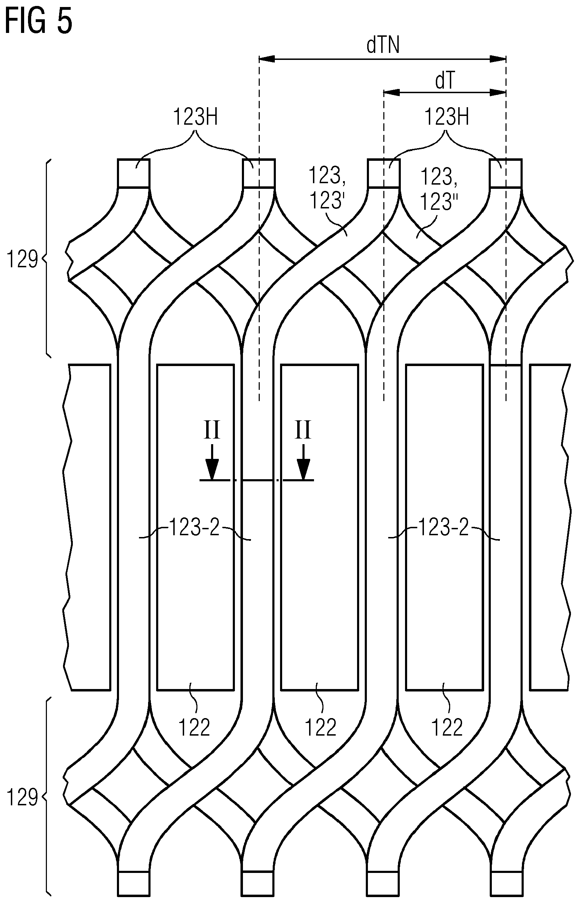

FIG 5 zeigt eine radiale Draufsicht auf einen Teil des Stators 120 mit Zähnen 122 und Wicklungssystem 121, welche bezogen auf FIG 1 bspw. einer radial nach außen orientierten Sicht entspricht, ausgehend von der mit "V" gekennzeichneten und durch die gestrichelte Linie repräsentierten Ebene. Hierbei ist ein Litzenstab 123', der in einer ersten Nut 126 positioniert ist, mit einem weiteren Litzenstab 123" verbunden, der in einer zweiten, von der ersten Nut 126 aus gesehen übernächsten Nut 126 positioniert ist. Die einzelnen Litzenstäbe 123 sind miteinander verschaltet, indem erste Abschnitte 123-1 bzw. dritte Abschnitte 123-3 in ihren jeweiligen Endbereichen 123e bzw. an den Hülsen 123H miteinander verbunden sind, bspw. durch Löten oder Schweißen. Die miteinander verbundenen Litzenstäbe 123', 123" sind weiterhin so angeordnet, dass in der Reihenschaltung aufeinander folgende Litzenstäbe 123 zueinander in radialer Richtung versetzt sind, dass also bspw. der Endbereich 123e des zweiten 123" dieser beiden Litzenstäbe 123 unter dem Endbereich 123e des ersten 123' dieser beiden Litzenstäbe 123 positioniert ist. Die sich hierbei einander zugewandten Stirnflächen der Hülsen 123H in den Endbereichen 123e werden wie erwähnt bspw. miteinander verlötet. Für den in der FIG 2 dargestellten Fall, in dem in einer Nut 126 jeweils lediglich zwei Litzenstäbe 123 übereinander liegen, würden also die in der Reihenschaltung hintereinander geschalteten Litzenstäbe abwechselnd oben und unten in der jeweiligen Nut 126 liegen. Wenn je Nut 126 mehr als zwei Litzenstäbe 123 vorgesehen sind, würde sich von Nut zu Nut eine treppenartige Anordnung der Litzenstäbe 123 ergeben, bei der ein in Richtung der Reihenschaltung jeweils nächster Litzenstab 123 eine Ebene tiefer bzw. höher angeordnet wird als der jeweils vorhergehende.

Die ersten und dritten Abschnitte 123-1, 123-3 bilden die Wickelköpfe 129 des Statorwicklungssystems 121. Je nachdem, wie stark die die S-förmigen Ausgestaltungen der Litzenstäbe 123 in ihren ersten und dritten Abschnitten 123-1, 123-3 verursachenden Krümmungen ausfallen können, ergeben sich mehr oder weniger große axiale Versetzungen dA und damit sich mehr oder weniger in den axialen Richtungen erstreckende Wickelköpfe 129. Dadurch, dass die Litzenstäbe 123 wie beschrieben S-förmig vorgeformt werden, so dass insbesondere ihre Endbereiche 123e, mit denen sie mit weiteren Litzenstäben 123 elektrisch kontaktiert werden können, Versetzungen dT insbesondere in tangentialer Richtung aufweisen, können sowohl die Baugröße des Wickelkopfes 129 als auch seine Komplexität erheblich reduziert werden. Durch die Verwendung von derart vorpräparierten Litzenstäben 123 wird also im Bereich der Wickelköpfe 129 Platz eingespart. Außerdem ist es aufgrund der S-Form nicht nötig, dass ein sonst durchgehendes Zwischenstück im Wickelkopf, welches zwei aufeinander folgende zweite Abschnitte 123-2 verbinden soll, einen Bogen vollzieht, um die 180°-Richtungsänderung von einem zweiten Abschnitt 123-2 zum nächsten zu realisieren. Derartige Bögen waren bislang nicht ohne Auffächerung der sie bildenden Litzenleiter realisierbar. Diese Problematik tritt in der hier vorgegebenen Lösung nicht mehr auf.

Zur Herstellung eines entsprechenden Statorwicklungssystems 121 für einen Stator 120 mit einer Anzahl Z von Nuten 126 wird eine von der Anzahl Z abhängige Anzahl entsprechende Anzahl L von Litzenstäben 123 bereitgestellt. Die Anzahl L hängt dabei von der Anzahl Z sowie von der Anzahl P der in jeder Nut 126 zu platzierenden Litzenstäbe 123 ab, so dass letztlich gilt L=Z*P. Im in der FIG 2 exemplarisch dargestellten Fall gilt P=2.

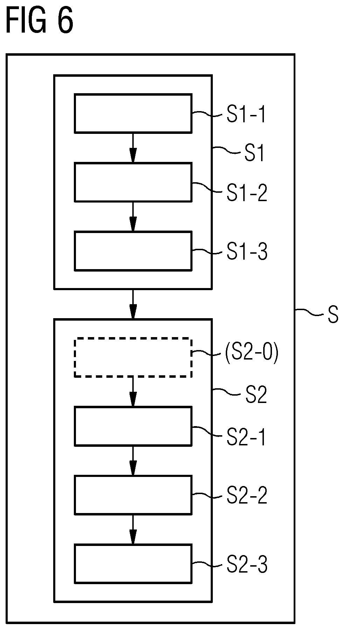

Dieses Herstellverfahren S des Statorwicklungssystems 121 wird in der FIG 6 schematisch dargestellt. Die bereitzustellenden Litzenstäbe 123 werden in einem ersten Schritt S1 des Herstellverfahrens S zunächst wie im Zusammenhang mit der FIG 3 beschrieben vorgeformt. Für jeden herzustellenden Litzenstab 123 wird in einem ersten Teilschritt S1-1 des ersten Verfahrensschrittes S1 jeweils ein eine Vielzahl von isolierten Einzelleitern 123L umfassender, an sich bekannter Litzenleiter bereitgestellt, und dahin gehend bearbeitet, dass der hieraus herzustellende Litzenstab 123 einen rechteckigen Querschnitt erhält.

Anschließend wird der Litzenstab 123 in einem zweiten Teilschritt S1-2 des ersten Verfahrensschrittes S1 dahin gehend vorgeformt, dass seine Endbereiche 123e gegenüber seinem jeweiligen zweiten Abschnitt 123-2 in tangentialer und in axialer Richtung versetzt sind. Die hierbei gewählten Versetzungen dT werden bspw. mit dT=dTN/2 in Abhängigkeit von den tangentialen Abständen dTN derjenigen Nuten 126 vorgegeben, in denen in der Reihenschaltung des Statorwicklungssystems 121 hintereinander zu schaltende Litzenstäbe 123 positioniert werden sollen. Dabei ist dTN=n*dN ein ganzzahliges Vielfaches des tangentialen Abstandes dN zweier benachbarter Nuten 126 des Stators 120, wobei typischerweise, aber nicht notwendigerweise n≥2 gilt.

In einem dritten Teilschritt S1-3 des ersten Verfahrensschrittes S1 werden die Endbereiche 123e schließlich bspw. heißgecrimpt und mit den Hülsen 123H versehen.

In einem zweiten Schritt S2 des Herstellverfahrens wird das Statorwicklungssystem 121 aus den so vorbereiteten, bspw. den Ausbildungen gemäß FIG 3 oder FIG 4 entsprechenden Litzenstäben 123 aufgebaut. Hierzu werden die Litzenstäbe 123 in einem ersten Teilschritt S2-1 des zweiten Verfahrensschrittes S2 derart in die Nuten 126 eingelegt, dass die Endbereiche 123e derjenigen Litzenstäbe 123, die in der Reihenschaltung des Statorwicklungssystems 121 hintereinander liegen sollen, mit ihren Hülsen 123H beieinander liegen, bspw. übereinander, so dass sie elektrisch miteinander verbunden werden können, um schließlich die angestrebte Reihenschaltung zu realisieren. Die Grundlage hierfür wurde bereits bei der Herstellung und Dimensionierung der Litzenstäbe 123 insbesondere bezüglich der Versetzungen dT geschaffen.

In einem optionalen, vor dem ersten Teilschritt S2-1 des zweiten Verfahrensschrittes S2 liegenden Zwischenschritt S2-0 werden jeweils zwei Litzenstäbe 123, bevor sie in die für sie vorgesehenen Nuten 126 eingelegt werden, an denjenigen ihrer Endbereiche 123e bzw. Hülsen 123H bereits vorab elektrisch miteinander verbunden, welche im in den Stator 120 bzw. in die Nuten 126 eingebauten Zustand beieinander liegen sollen, um die Reichenschaltung zu realisieren.

In einem auf den ersten Teilschritt S2-1 folgenden zweiten Teilschritt S2-2 des zweiten Verfahrensschrittes S2 werden diejenigen Litzenstäbe 123, welche in der Reihenschaltung des Statorwicklungssystems 121 hintereinander liegen, elektrisch miteinander verbunden. Für den Fall, dass der optionale Schritt S2-0 stattgefunden hat und dementsprechend schon eine Vielzahl von elektrischen Verbindungen hergestellt wurde, entfällt dies natürlich für die bereits bestehenden elektrischen Verbindungen.

Wie bereits erwähnt können die elektrischen Verbindungen der beieinander liegenden Endbereiche 123e bzw. Hülsen 123H bspw. durch Löten oder Schweißen realisiert werden.

Für den Fall, dass eine Anordnung gemäß FIG 2 entstehen soll, bei der die Litzenstäbe 123 insbesondere in einer Nutauskleidung 128 liegen und zudem Kühlkanäle 127 vorgesehen sind, kann in einem dritten Teilschritt S2-3 des zweiten Verfahrensschrittes S2 die Nutauskleidung 128 bspw. mit Hilfe eines Vergussverfahrens hergestellt werden, bei dem die Litzenstäbe in der Nut 126 vergossen werden. Als Vergussmaterial kann bspw. ein Kunstharz bzw. glasfaserverstärkter Kunststoff (GFK) verwendet werden. Die Litzenstäbe 123 werden in den entsprechenden Nuten 126 in an sich bekannter Art und Weise mit dem Vergussmaterial vergossen. Um die Kühlkanäle 127 zu schaffen, können beim Vergießen an den entsprechenden Stellen, also bspw. entlang der radialen Oberflächen 123o der Litzenstäbe 123, Platzhalter vorgesehen sein, welche nach dem Vergießen und insbesondere nach Aushärtung des Vergussmaterials entfernt werden. Diese Platzhalter, bspw. ausgebildet als Teflonstreifen, zeichnen sich durch eine minimale Haftung an den Oberflächen 123o der Litzenstäbe 123 sowie an dem Vergussmaterial aus, so dass sie nach der Aushärtung ohne größeren Aufwand entfernt bzw. herausgezogen werden können und so die Kühlkanäle 127 gebildet werden.

Das Wicklungssystem wurde oben exemplarisch als Statorwicklungssystem 121 beschrieben. Es ist jedoch denkbar, dass es in entsprechender Ausführung zusätzlich oder alternativ als Wicklungssystem zur Realisierung der magnetischen Mittel 112 des Rotors 110 verwendet wird. Um dies zu verallgemeinern kann bspw. der Begriff "Aktivteil" eingeführt werden, so dass die Litzenstäbe letztlich zur Bildung eines Wicklungssystems für ein Aktivteil einer elektrischen Maschine vorgesehen sind.

### Bezugszeichenliste

- 100: elektrische Maschine
- 110: Rotor
- 112: Permanentmagnet
- 120: Stator
- 121: Statorwicklungssystem
- 121': Leiter
- 121'-2: Leiterabschnitt
- 122: Statorzahn
- 122f: Zahnfuß
- 122h: Zahnhals
- 122k: Zahnkopf
- 123: Litzenstab
- 123-1, 123-2, 123-3: Litzenstababschnitte
- 123e: Endbereich
- 123H: Hülse
- 123L: Einzelleiter
- 123o: Litzenstaboberfläche
- 124: Nutverschluss
- 125: Statorjoch
- 126: Statornut
- 126w: Nutwand
- 127: Kühlkanal
- 128: Isolierung, Verguss, Nutauskleidung
- 129: Wickelkopf
- 150: Luftspalt
- 200: Stromquelle
- 210: elektrische Energiequelle
- 220: Leistungselektronik
- 230: elektrische Verbindung

## Patentansprüche

1. Litzenstab (123), aufweisend
- einen ersten (123-1), einen zweiten (123-2) und einen dritten Abschnitt (123-3), wobei der zweite Abschnitt (123-2) in axialer Erstreckungsrichtung des Litzenstabs (123) zwischen dem ersten (123-1) und dem dritten Abschnitt (123-3) angeordnet ist, sowie
- an den beiden Enden im ersten (123-1) und dritten Abschnitt (123-3) des Litzenstabes (123) vorgesehene Endbereiche (123e),
wobei der Litzenstab (123) derart vorgeformt ist, dass
- er einen rechteckigen Querschnitt aufweist,
- der zweite Abschnitt (123-2) gerade ist und sich in axialer Richtung erstreckt,
- die im ersten (123-1) und im dritten Abschnitt (123-3) angeordneten Endbereiche (123e) gegenüber dem zweiten Abschnitt (123-2) in tangentialer Richtung und in axialer Richtung versetzt (dT, dA) sind.

2. Litzenstab (123) nach Anspruch 1, **dadurch gekennzeichnet, dass** der erste (123-1) sowie der dritte Abschnitt (123-3) S-förmig sind.

3. Litzenstab (123) nach Anspruch 1, **dadurch gekennzeichnet, dass** der erste (123-1) sowie der dritte Abschnitt (123-3) jeweils gerade verlaufen und jeweils gegenüber der Längsrichtung des zweiten Abschnitts (123-2) um einen Winkel a mit 90°<a<180° abgewinkelt sind.

4. Litzenstab (123) nach einem der Ansprüche 1 bis 3, **dadurch gekennzeichnet, dass** der erste (123-1), der zweite (123-2) und der dritte Abschnitt (123-3) im Wesentlichen in einer Ebene liegen, welche sich in tangentialer Richtung und in axialer Richtung erstreckt.

5. Litzenstab (123) nach einem der Ansprüchen 1 bis 4, **dadurch gekennzeichnet, dass** in den Endbereichen (123e) des Litzenstabs (123) elektrisch leitfähige Hülsen (123H) vorgesehen sind, welche die in den Endbereichen (123e) des Litzenstabes (123) endenden Einzelleiter (123L) des jeweiligen Litzenstabes (123) umfassen, wobei ein elektrischer Kontakt zwischen Einzelleitern (123L) und jeweiliger Hülse (123H) bewirkt ist.

6. Litzenstab (123) nach einem der Ansprüche 1 bis 5, **dadurch gekennzeichnet, dass** die axiale (dA) und die tangentiale Versetzung (dT) derart dimensioniert sind, dass die Endbereiche (123e) eines Litzenstabes (123) bezüglich des geometrischen Mittelpunktes des zweiten Abschnitts (123-2) punktsymmetrisch zueinander angeordnet sind.

7. Wicklungssystem (121) für ein Aktivteil (120) einer elektrischen Maschine (100) aufweisend eine Vielzahl von Litzenstäben (123) nach einem der Ansprüche 1 bis 6, **dadurch gekennzeichnet, dass** zumindest eine Teilmenge der Litzenstäbe (123) eine Reihenschaltung bildend hintereinander geschaltet ist.

8. Wicklungssystem (121) nach Anspruch 7, **dadurch gekennzeichnet, dass** für einen jeweiligen Litzenstab (123) zumindest ein Kühlkanal (127) zum Leiten eines Kühlmittels zur Kühlung des Litzenstabes (123) vorgesehen ist, welcher an einer Oberfläche (123o) des jeweiligen Litzenstabes (123) insbesondere in axialer Richtung verläuft.

9. Wicklungssystem (121) nach Anspruch 8, **dadurch gekennzeichnet, dass** die zweiten Abschnitte (123-2) der Litzenstäbe (123) ausgebildet sind, um in Nuten (126) des Aktivteils (120) positioniert zu werden, wobei das Wicklungssystem (121) für jede der Nuten (126) eine Nutauskleidung (128) umfasst, in die die Litzenstäbe (123) eingelegt sind, wobei die Nutauskleidung (128) eine oder mehrere Aussparungen (127) zur Bildung eines jeweiligen Kühlkanals (127) aufweist.

10. Verfahren zur Herstellung eines Wicklungssystems (121) nach einem der Ansprüche 7 bis 9 an einem Aktivteil (120) einer elektrischen Maschine (100), wobei
- in einem ersten Verfahrensschritt S1 eine Vielzahl von Litzenstäben (123) bereit gestellt und vorgeformt wird,
- in einem zweiten Verfahrensschritt S2 das Wicklungssystem (121) aus den vorgeformten Litzenstäben (123) aufgebaut wird.

11. Verfahren nach Anspruch 10, **dadurch gekennzeichnet, dass** im ersten Verfahrensschritt (S1) zum Vorformen eines jeweiligen Litzenstabes (123)
- in einem ersten Teilschritt S1-1 des ersten Verfahrensschrittes S1 ein eine Vielzahl von isolierten Einzelleitern (123L) umfassender Litzenleiter einer bestimmten Länge bereitgestellt und zur Bildung des Litzenstabes (123) über seine gesamte Länge mit einem rechteckigen Querschnitt versehen wird, und
- in einem zweiten Teilschritt S1-2 des ersten Verfahrensschrittes S1 der so gebildete Litzenstab (123) unter Beibehaltung des rechteckigem Querschnitts dahin gehend gebogen wird, dass seine Endbereiche (123e) gegenüber seinem jeweiligen zweiten Abschnitt (123-2) in tangentialer und in axialer Richtung versetzt sind.

12. Verfahren nach Anspruch 11, **dadurch gekennzeichnet, dass** in einem dritten Teilschritt S1-3 des ersten Verfahrensschrittes S1 in jedem der Endbereiche (123e) eines jeweiligen Litzenstabes (123) die dortigen Einzelleiter (123L) elektrisch miteinander verbunden werden und die so gebildeten Gesamtkontakte jeweils mit einer elektrisch leitfähigen Hülse (123H) versehen und elektrisch kontaktiert werden.

13. Verfahren nach einem der Ansprüche 10 bis 12, **dadurch gekennzeichnet, dass** die vorgeformten Litzenstäbe (123) in einem ersten Teilschritt S2-1 des zweiten Verfahrensschrittes S2 derart in Nuten (126) des Aktivteils (120) eingelegt werden, dass jeweils einer der Endbereiche (123e) derjenigen Litzenstäbe (123), die in der Reihenschaltung des Wicklungssystems (121) hintereinander geschaltet sein sollen, beieinander liegen, so dass sie direkt elektrisch miteinander verbunden werden können.

14. Verfahren nach Anspruch 13, **dadurch gekennzeichnet, dass** in einem vor dem ersten Teilschritt S2-1 des zweiten Verfahrensschrittes S2 auszuführenden Zwischenschritt S2-0 jeweils zwei Litzenstäbe (123), bevor sie in die für sie vorgesehenen Nuten (126) eingelegt werden, an denjenigen ihrer Endbereiche (123e) bereits vorab elektrisch miteinander verbunden werden, welche im in das Aktivteil (120) eingebauten Zustand beieinander liegen sollen, um die Reichenschaltung zu realisieren.

15. Verfahren nach einem der Ansprüche 13 bis 14, **dadurch gekennzeichnet, dass** die Litzenstäbe (123) in Nutauskleidungen (128) der Nuten (126) des Aktivteils (120) eingelegt werden, wobei
- eine jeweilige Nutauskleidung (128) mit Hilfe eines Vergussverfahrens hergestellt wird, bei dem jeweils ein oder mehrere Litzenstäbe (123) in die jeweilige Nut (126) eingelegt und dort zur Bildung der jeweiligen Nutauskleidung (128) mit einem Vergussmaterial vergossen werden,
- eine jeweilige Nutauskleidung (128) für zumindest einen dort vergossenen Litzenstab (123) einen Kühlkanal (127) in Form einer Aussparung zum Leiten eines Kühlmittels zum Kühlen des Litzenstabes (123) aufweist,
- die jeweilige Aussparung (127) geschaffen wird, indem beim Vergießen im Bereich des zu kühlenden Litzenstabs (123) an dem Ort, an dem das Kühlmittel mit dem zu kühlenden Litzenstab (123) wechselwirken soll, ein Platzhalter positioniert wird, welcher nach dem Vergießen und insbesondere nach Aushärtung des Vergussmaterials entfernt wird, so dass der jeweilige Kühlkanal (127) als Aussparung zurück bleibt.
